# EUROPEAN PATENT SPECIFICATION

(11) **EP 4 526 074 B1**
(45) Date of publication and mention of the grant of the patent: **06.08.2025**
(21) Application number: 23718849.5
(22) Date of filing: 31.03.2023
(51) Int. Cl.: B23K 23/00, B23K 37/00

(54) **FILTER AND METHOD FOR FILTERING WASTE PRODUCED FROM A CRUCIBLE DURING THE ALUMINOTHERMIC WELDING REACTION**
FILTER UND VERFAHREN ZUM FILTERN VON AUS EINEM TIEGEL WÄHREND DER ALUMINOTHERMISCHEN SCHWEISSREAKTION ENTSTANDENEN ABFÄLLEN
FILTRE ET PROCÉDÉ DE FILTRAGE DE DÉCHETS PRODUITS À PARTIR D'UN CREUSET PENDANT LA RÉACTION DE SOUDAGE ALUMINOTHERMIQUE

(43) Date of publication of application: 26.03.2025
(73) Proprietor: Goldschmidt Holding GmbH, 04109 Leipzig (DE); Thermit Welding (GB) Limited, Rainham, Essex RM13 9YH (GB)
(72) Inventor: KILSBY, Alan, Rainham Essex RM13 9YH (GB); COWAN, Michael, Chelmsford Essex CM3 7AW (GB)
(86) International application number: PCT/IB2023/053255
(87) International publication number: WO 2024/201115

(56) References cited:
- CN-U- 210 649 002
- CN-U- 216 706 285
- US-A- 4 881 677
- US-A1- 2012 255 699
- US-B2- 7 717 286

## Description

### Technical Field

The present invention relates to the technical field of waste filtration, especially filtering waste produced from a crucible during the aluminothermic welding of rail.

### Background Art

Rail joining using aluminothermic welding has been employed for many years owing to its robustness, portability, and relatively low cost. The inherent characteristic of the process is the reduction of iron oxide by aluminium. This chemical reaction is highly exothermic and liberates copious quantities of heat, thereby generating high temperatures and inevitably accompanying amounts of fume and potentially flammable gases, largely as by-products of the reaction. With ever-tightening legislation related to welders' health and safety, there is a growing need for a safe, reliable, and cost-effective system by which these by-products can be captured, thereby ensuring welders are not exposed to unnecessarily high levels of these waste products. This is especially the case when the process is deployed underground or in confined spaces where there is an increased risk of fume accumulation.

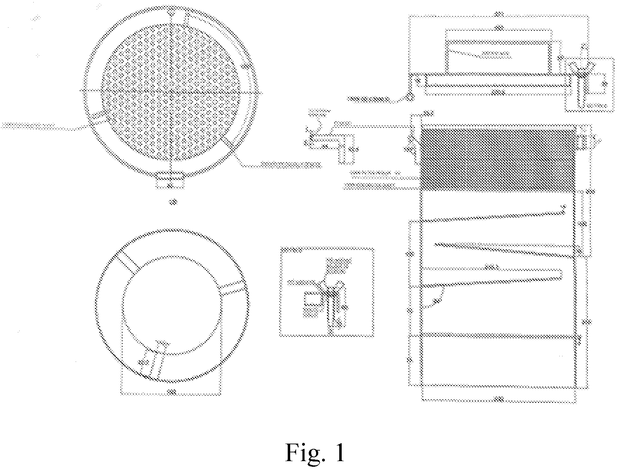

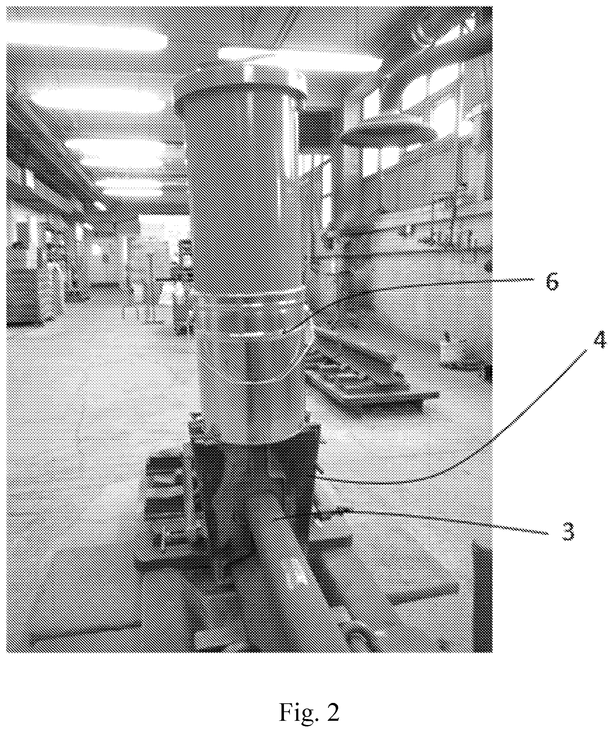

The conventional filter (see Fig. 1 and Fig. 2) that dates back to 2014 is tall and extends vertically from the crucible, which leads to structural instability during the filtering process. In addition, the conventional filter tends to rock on the crucible due to the pressure of the waste produced during the aluminothermic reaction.

The conventional filter employs two layers of filter material positioned on top of one another that are of relatively high density. This setup is such that it limits the life of the filters as the lower of the two filters rapidly becomes clogged with the solid particulate. The filter material life is also undesirably reduced when the filter is deployed with more lively aluminothermic welding chemicals. Examples of similar prior art can be found in documents US4881677A, US20120255699A1, US7717286B2, CN216706285U and CN210649002U.

### Technical Problem to be Solved

The present invention is aimed at improving the stability of the filter sitting on a crucible.

### Summary of the Invention

The invention is defined in independent claims 1 and 24. Further aspects are provided in dependent claims.

Further benefits and advantages of the present invention will become apparent after a careful reading of the detailed description with appropriate reference to the accompanying drawings.

### Brief Description of Drawings

Fig. 1 shows an illustrative view of the conventional filter system.
Fig. 2 shows an illustrative view of the conventional filter system of Fig. 1 sitting on the crucible on a rail.
Fig. 3a-3d shows how a welder applies the filter of the present invention to a crucible during an aluminothermic welding process on a rail.
Fig. 4 shows a perspective view of the filter of the present invention applied to a crucible.
Fig. 5 shows a cross-section view of Fig. 4.
Fig. 6 shows a cross-section view of Fig. 4 with a filter material of the present invention.
Fig. 7 shows a perspective view of the filter of Fig. 4.
Fig. 8 shows an exploded view of the filter of Fig. 7.
Fig. 9 shows a bottom view of the filter of Fig. 7.
Fig. 10 shows a front view of the filter of Fig. 7.
Fig. 11 shows a side view of the filter of Fig. 7.
Fig. 12 shows a top view of the filter of Fig. 7.
Fig. 13 shows a cross-section view taken along line A-A of Fig. 9.
Fig. 14 shows an expanded view of the partial body of the filter of Fig. 7.
Fig. 15 shows the illustrated view of the mounting plate of the body of the filter of Fig. 7.
Fig. 16 shows the workflow of the method for applying the filter of the present invention to a crucible during an aluminothermic welding process on a rail.

### Detailed Description

Although the invention has been explained in relation to its preferred embodiment(s) as mentioned above, it is to be understood that many other possible modifications and variations can be made without departing from the scope of the present invention, as defined by the appended claims.

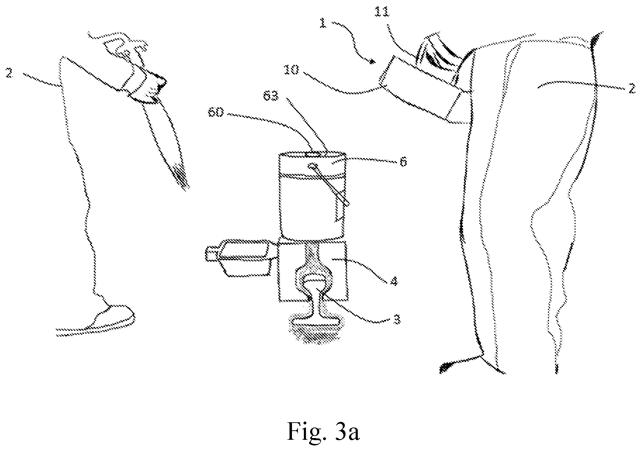

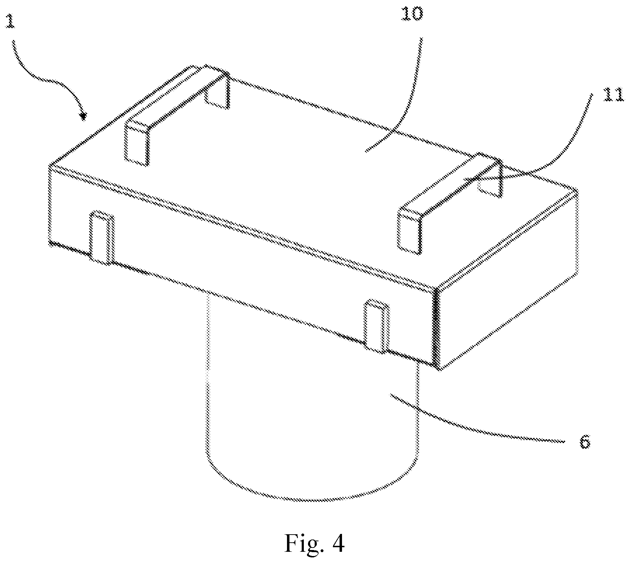

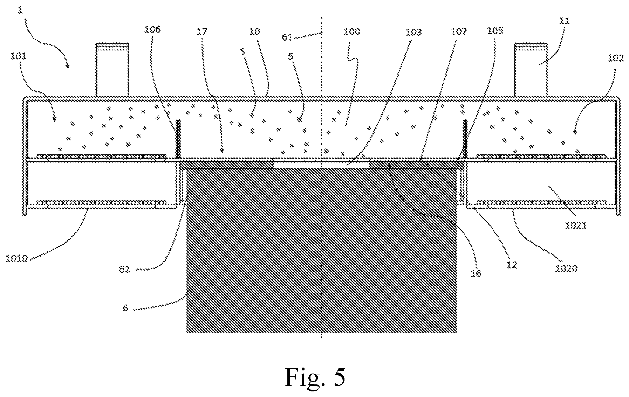

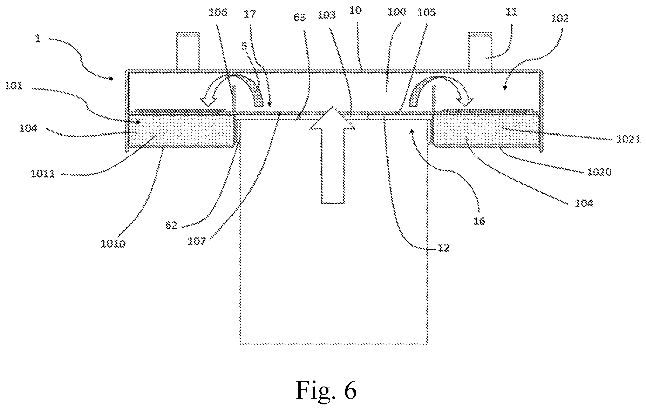

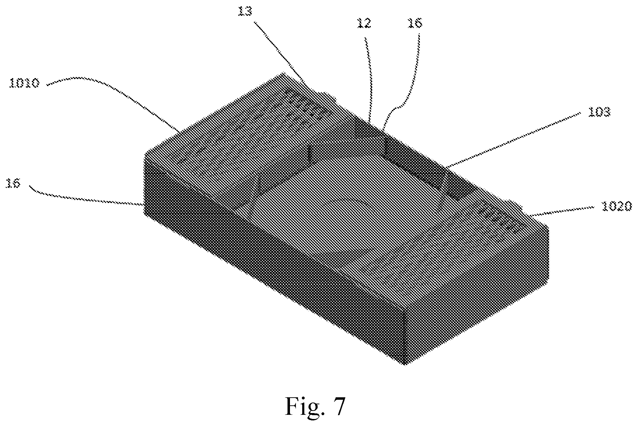

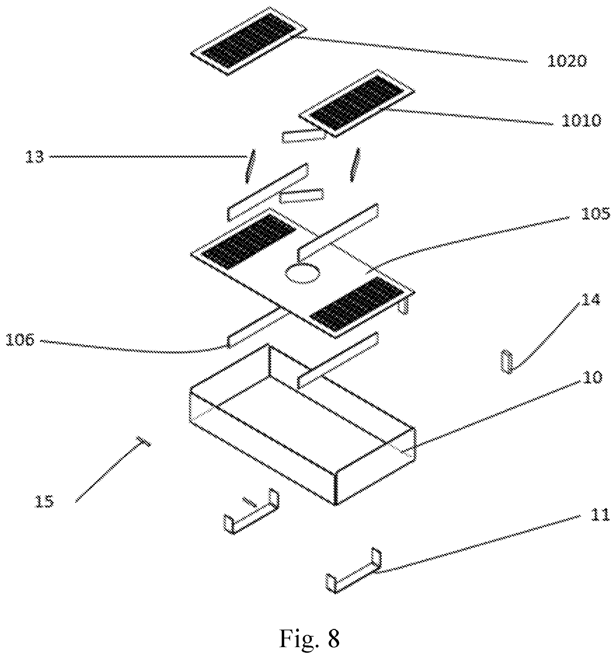

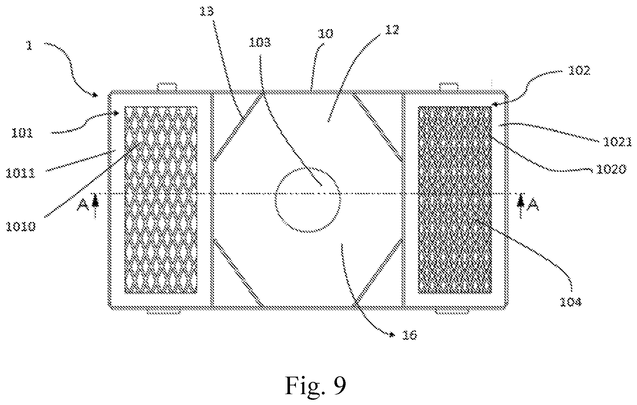

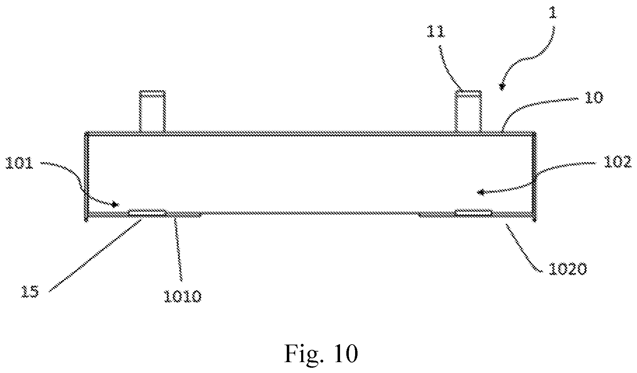

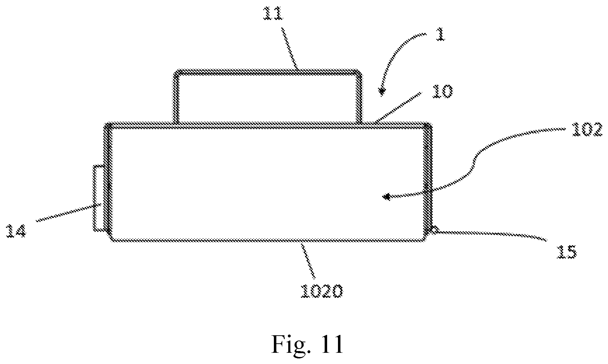

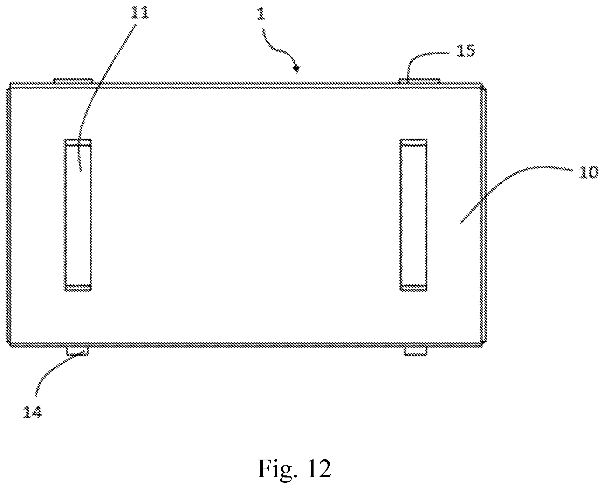

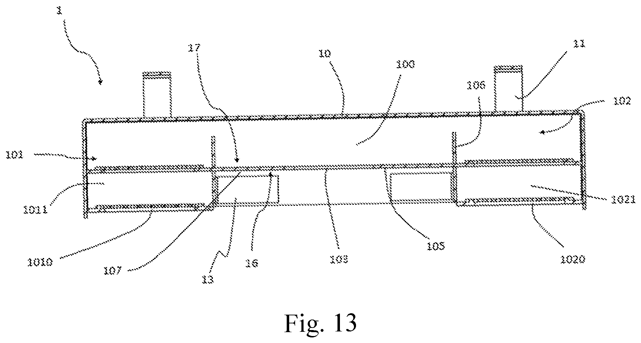

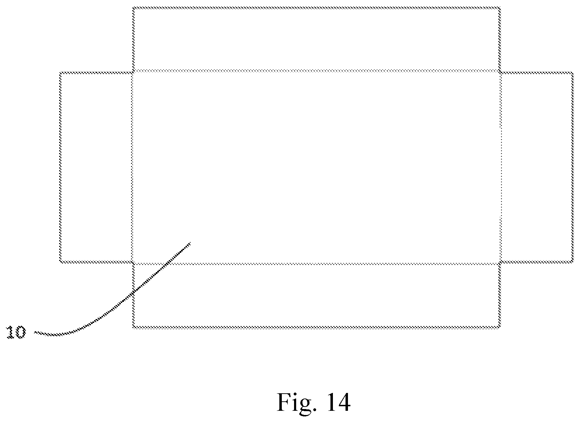

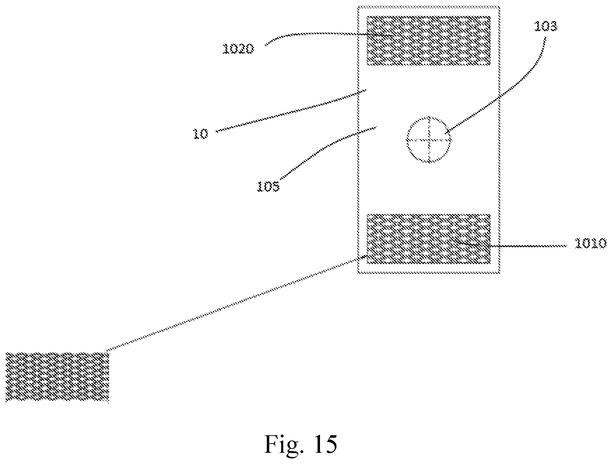

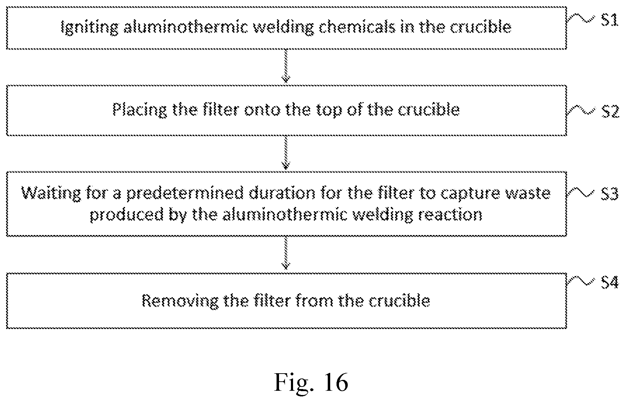

Fig. 1 shows an illustrative view of the conventional filter system. Fig. 2 shows an illustrative view of the conventional filter system of Fig. 1 sitting on the crucible on a rail. Fig. 3a-3d shows how a welder applies the filter of the present invention to a crucible during an aluminothermic welding process on a rail. Fig. 4 shows a perspective view of the filter of the present invention applied to a crucible. Fig. 5 shows a cross-section view of Fig. 4. Fig. 6 shows a cross-section view of Fig. 4 with a filter material of the present invention. Fig. 7 shows a perspective view of the filter of Fig. 4. Fig. 8 shows an exploded view of the filter of Fig. 7. Fig. 9 shows a bottom view of the filter of Fig. 7. Fig. 10 shows a front view of the filter of Fig. 7. Fig. 11 shows a side view of the filter of Fig. 7. Fig. 12 shows a top view of the filter of Fig. 7. Fig. 13 shows a cross-section view taken along line A-A of Fig. 9. Fig. 14 shows an expanded view of the partial body of the filter of Fig. 7. Fig. 15 shows the illustrated view of the mounting plate of the body of the filter of Fig. 7. Fig. 16 shows the workflow of the method for applying the filter of the present invention to a crucible during an aluminothermic welding process on a rail.

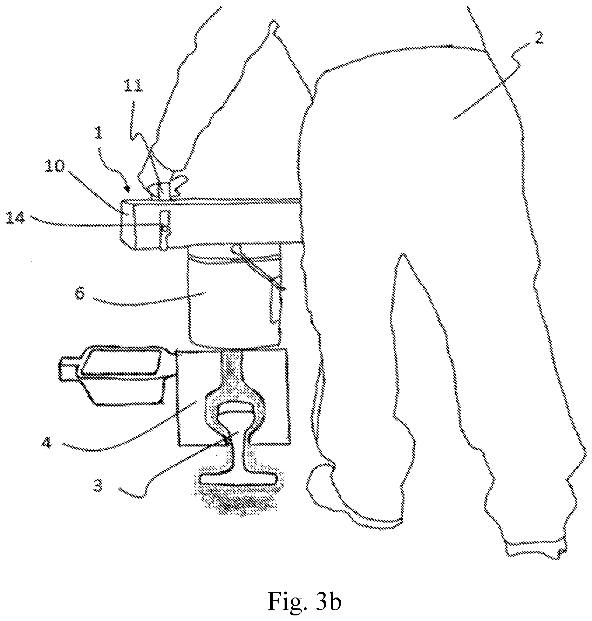

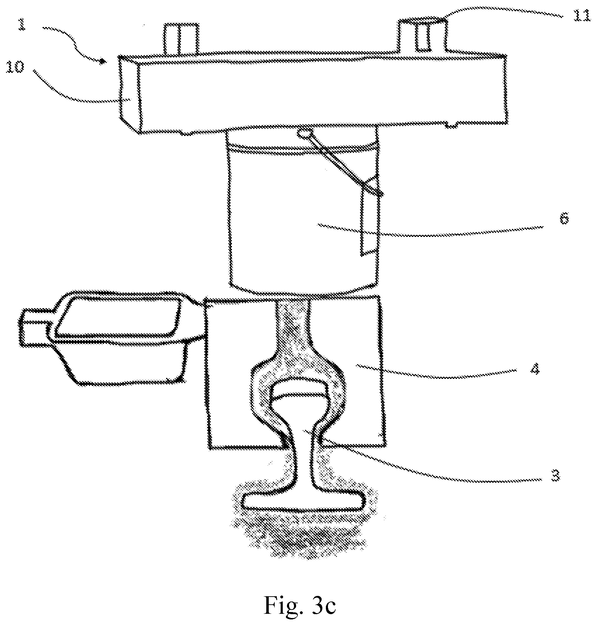

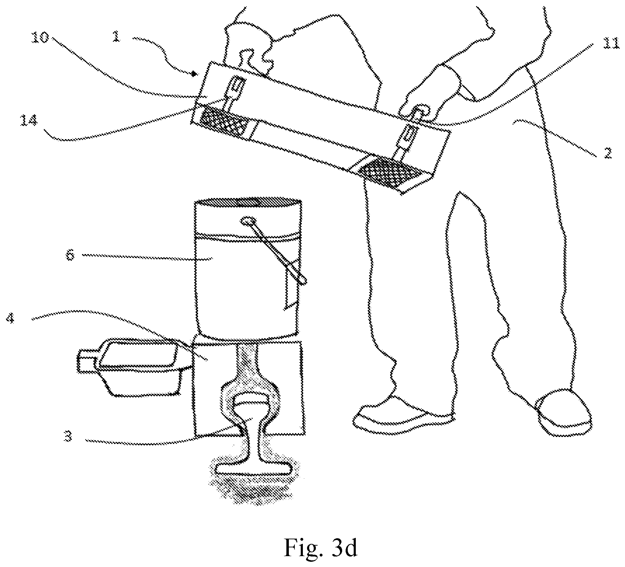

Please refer to Figs. 3-16 together. Fig. 3a-3d shows how a welder 2 applies the filter 1 of the present invention to a crucible 6 during an aluminothermic welding process on a rail 3. The crucible 6 can be a single-use crucible, a permanent-use crucible, or any kind of crucible for aluminothermic welding. Fig. 3 shows a single-use crucible 6 invented by the Goldschmidt Group. Specifically, Fig. 3a shows that a welder 2 ignites the aluminothermic welding chemicals in a crucible 6. The aluminothermic welding chemical reaction may produce undesirable chemicals from the outlet 60 of the crucible 6. The chemicals may include toxic gas such as carbon monoxide, fume, particles, welding slag, and/or debris. In the patent application, these chemicals all refer to "waste". To prevent the welder 2 from inhaling the waste 5, the welder 2 places the filter 1 of the present invention on the top 63 of the crucible 6 to cover the outlet 60 of the crucible 6 as soon as the aluminothermic welding chemicals are ignited in the crucible 6 (Fig. 3b). Fig. 3b shows that the filter 1 remains on top 63 of the crucible 6 for a predetermined duration to capture waste 5 produced by the aluminothermic reaction. The filter 1 extends perpendicular to the axis 61 of the crucible 6 and thus lies horizontally with respect to the crucible 6, so that the mould 4, the crucible 6, and the filter 1 can be stably placed and balanced on the rail 3. The present invention improves significantly the stability compared to the conventional filter in Fig. 1 and Fig. 2. Fig. 3b highlights the relatively low centre of gravity of the filter 1 of the present invention compared to the conventional filter, thereby ensuring its stability and safety during its deployment. Then, the welder 2 removes the filter 1 from the crucible 6 once the waste 5 has been captured to leave the welder 2 in a cleaner and safer environment.

Please refer to Figs. 4-6 together. The present invention provides a filter 1 for filtering waste 5 produced from a crucible 6 during the aluminothermic reaction when welding rail 3. The filter 1 is designed to be placed on the outlet 60 of the crucible 6. The filter 1 comprises a body 10 and two handles 11. The body 10 includes a waste passage 100, an inlet 103, a filter material 104, a first protruding portion 101, a second protruding portion 102, a baffle plate 106, a mounting plate 105, a seal felt 12, a felt restraint 13, a latch 14 and a hinge 15. The first protruding portion 101 includes a first outlet 1010. The second protruding portion 102 includes a second outlet 1020.

Specifically, Fig. 4 shows that the body 10 includes two handles 11 symmetrically disposed on the body 10 of the filter 1. In another embodiment, the filter 1 can only have one handle 11 in the middle of the body 10, can have more than one handle 11, or can have no handle. The welder 2 can hold the handle 11 for placing the filter 1 onto the crucible 6 easily. Two handles 11 are located on the top of the body 10 of the filter 1 to facilitate its easy and safe positioning and in turn its safe removal at the mandated time after tapping of the steel from the crucible 6.

The body 10 extends perpendicular to the axis 61 of the crucible 6, allowing the body 10 to be placed horizontally on the crucible 6 when it is viewed from above. In a preferred embodiment, the body 10 is shaped to be a rectangular box when it is viewed from above. For example, the dimensions of the body 10 are 45-85 cm (preferably 55.6 cm) in length, 25-50 cm (preferably 30.0 cm) in width, and 8-20 cm (preferably 11.0 cm) in height. The rectangular box design of the body 10 allows for the fabrication of the case of the body 10 from a single piece of cut steel sheet, thereby reducing manufacturing complexity in terms of the amount of welding required to create a gas-tight seal in the outer skin. Such a design also reduces the cost of manufacture and reduces the risk of leakage of either solid particulate or gaseous fumes. In a preferred embodiment, the body 10 is integrally formed.

The first protruding portion 101 extends adjacent to the side 62 of the crucible 6 and includes the first outlet 1010. The second protruding portion 102 extends adjacent to the side 62 of the crucible 6 and includes a second outlet 1020. The first protruding portion 101 and the second protruding portion 102 extend out from the cross-section of the crucible 6 (when the filter 1 is placed on the crucible 6 and is viewed from above) and extend further downward adjacent to the side 62 of the crucible 6 and parallel to the side 62 of the crucible 6. The lower part 1011 of the first protruding portion 101 and the lower part 1021 of the second protruding portion 102 of the filter 1 lie below the plane of the outlet 60 of the crucible 6, resulting in a centre of gravity of the filter 1 as a whole lying very close to the top 63 of the crucible 6 and therefore improving the stability of the filter 1 sitting on the top 63 of the crucible 6. To secure the placement, the body 10, the first protruding portion 101, and the second protruding portion 102 define a crucible receiving area 16 for securing the filter 1 on the crucible 6. The inlet 103, the first outlet 1010, the second outlet 1020, and the waste passage 100 are communicated. The first outlet 1010 and the second outlet 1020 direct the waste 5 out of the filter 1. The first outlet 1010 and the second outlet 1020 are respectively hinged with the first protruding portion 101 and the second protruding portion 102 through the hinges 15 so that the first outlet 1010 and the second outlet 1020 can easily be opened. The first outlet 1010 and the second outlet 1020 are configured to be meshes. The meshes of the first outlet 1010 and the second outlet 1020 can be made of metal (preferably steel or stainless steel), or any material.

In another embodiment, the first protruding portion 101 and the second protruding portion 102 are communicably and integrally formed; in this case, the body 10 can be a circular box, and the first protruding portion 101 and the second protruding portion 102 can be circular in shape or essentially an annulus around the periphery of the body 10 and adjacent around the side 62 of the crucible 6. In another embodiment, the filter 1 can have only one protruding portion. In another embodiment, the body 10 can also have other shapes, for example, a square box, or a triangular box, when the filter 1 is placed on the top 63 of the crucible 6 and is viewed from above. The body 10 allows the filter 1 to be balanced on the crucible 6. In a preferred embodiment, the body 10 is symmetrically formed, and the body 10 extends out from the cross-section of the crucible 6.

The body 10 includes a mounting plate 105 defined as the bottom 107 of the body 10 and which is in contact with the top 63 of the crucible 6. The inlet 103 of the body 10 is provided on the mounting plate 105. The mounting plate 105 extends horizontally into the first protruding portion 101 and the second protruding portion 102. The filter 1 includes a latch 14 for attaching or securing the first outlet 1010 and the second outlet 1020 to the body 10. Specifically, the latches 14 can be locked or unlocked to close or open the first outlet 1010 or the second outlet 1020, and the first outlet 1010 and the second outlet 1020 can be pivoted around the hinges 15. The latch 14 is preferably an over-centre latch or a loop latch, which are made of steel. In a preferred embodiment, two latches 14 are provided for the filter 1. The body 10 and the mounting plate 105 can also be integrally formed in another embodiment.

Please refer to Figs. 4-6. The inlet 103 directs the waste 5 from the outlet 60 of the crucible 6 into the waste passage 100. The inlet 103 of the body 10 lies above the outlet 60 of the crucible 6 and is preferably larger in area than the outlet 60 of the crucible 6 so that the inlet 103 can capture all waste 5 produced from the crucible 6. The inlet 103 of the body 10 is circular in shape or any shape. The inlet 103 is on the bottom 107 of the body 10. The inlet 103 is a circular hole of 5-12 cm (preferably 9.0 cm) in diameter through which the waste 5 from the aluminothermic reaction can pass. The waste passage 100 allows the waste 5 to flow through the filter 1 and perform purification. The outlet directs the waste 5 out of the filter 1.

The filter material 104 is provided in the first protruding portion 101 and/or the second protruding portion 102. In another embodiment, the filter material 104 may be provided inside the first outlet 1010, inside the second outlet 1020, or anywhere in the body 10, but preferably away from the inlet 103 of the body 10. The filter material 104 is made from a combination of fire retardant and non-combustible materials which allows for capturing and filtering waste 5. The filter material 104 can be selected from the group of polymer, nylon, glass, mineral stone wool, calcium magnesium silicate, alumina-silica, alumina-zirconia silica, and/or magnesia. There are many possible arrangements of the filter material 104. The waste 5 can be filtered by the filter material 104s, and then the filtered gas can be released out of the first outlet 1010 and/or the second outlet 1020 of the filter 1.

The filter material 104 is reusable for multiple welding operations. If the filter material 104 becomes worn or blocked, a welder 2 can change the filter material 104. Specifically, the first outlet 1010 of the first protruding portion 101 and the second outlet 1020 of the second protruding portion 102 are respectively hinged with the first protruding portion 101 and the second protruding portion 102 so that the first outlet 1010 of the first protruding portion 101 and the second outlet 1020 of the second protruding portion 102 are openable.

In a preferred embodiment, the first outlet 1010 and the second outlet 1020 are welded meshes made of stainless steel. The meshes of the first outlet 1010 and the second outlet 1020 have a lattice spacing of nominally 1.5 cm and act as filter doors. The filter doors (the first outlet 1010 and the second outlet 1020) support the filter material 104 and in combination permit the free egress of any residual gaseous products. A hinge 15 arrangement permits easy access to change the filter material 104. In particular, the potential use of filter materials 104 of lower density offers the ability to allow waste 5 to travel deeper into the filter material 104, thereby allowing their consecutive use for a higher number of welds before becoming sufficiently clogged with particulate reducing their efficacy, thereby necessitating their replacement. Particulate penetration into higher-density filter material 104 is less, such that particulate builds up more rapidly on the uppermost filter surface leading to a more rapid decrease in its particulate capturing efficiency. Fume analysis has shown the filter material 104 to be effective in capturing a variety of oxides resulting from the aluminothermic reaction including those of iron, aluminium, manganese, silicon, and chromium. Furthermore, emissions of potentially flammable gases are reduced to levels considerably below the recommended Work Exposure Levels (WELs).

The first outlet 1010, the second outlet 1020, and the inlet 103 of the body 10 face downward when the filter 1 is placed on the crucible 6, so filtered gas cannot surge out of the outlet directly into the face of a welder 2. In addition, the downward-facing outlets of the filter 1 act as a safety feature. For example, if any flames are present during the chemical reaction and penetrate through the filter 1 out of the first outlet 1010 and the second outlet 1020, the flames would be facing downwards and away from the welder 2, thereby minimizing any risk of injury to the welder 2. Also, when the welder 2 removes the filter 1 after the welding chemical reaction has finished, and if there are any residual flames inside the filter 1, such flames would be facing away from the welder 2 and the filter 1 acts as a shield against any such flames.

In another embodiment, the inlet 103 of the body 10, the first outlet 1010 and the second outlet 1020 can also face other directions. In a preferred embodiment, the first outlet 1010 of the first protruding portion 101, and the second outlet 1020 of the second protruding portion 102 are configured to be meshes made of metal.

Figs. 5 and 6 show the flow of the waste 5. The waste 5 including hot particulate and reaction gases essentially rises vertically from the outlet 60 of the crucible 6 into the inlet 103 and is then directed first horizontally and thereafter vertically downwards exiting the two filter materials 104 located at the extremes of the filter 1.

The filter 1 includes one or more baffle plates 106 in the body 10. The baffle plates 106 not only prevent slags from hitting the filter material 104 directly but also act in combination with the designated waste passage 100 inside the filter 1 to calm down the waste flow before contacting the filter material 104. Furthermore, the baffle plates 106 require waste 5 to take a longer path before they reach the filter material 104. In a preferred embodiment, the gap (with a width of 1-10 cm) through which the gases pass through the baffle plates 106 is no smaller than the inlet 103 of the filter 1 or the outlet of the filter 1, thereby avoiding any bottle neck which would lead to a venturi effect.

The level of activity of the aluminothermic reaction may vary depending on the chemical composition of the portion. In some compositions, the chemical reaction causes slag to surge out of the outlet 60 of the crucible 6 together with the waste fume and gas. The slag is not desirable for contacting the filter material 104 as it tends to adhere to the filter material 104 and, in the worst case burn holes through the filter material 104, thereby decreasing the filtering efficiency of the filter material 104. Moreover, the baffle plate 106 and the mounting plate 105 define a slag precipitation area 17. The length of the slag precipitation area 17 and the height of the baffles are configured to inhibit the amount of slag passing or crossing over the baffle and to minimize the risk of the slag sticking to the inlet 103 of the body 10. In a preferred embodiment, the baffle plates 106 extend perpendicular to the partition plate and guide the air in the waste passage 100.

In addition, the baffle plates 106 limit the build-up of potentially flammable gases within the filter 1 and reduce the associated risk of their spontaneously combusting once sufficient oxygen becomes available.

The filter 1 also improves the effectiveness of the seal between the filter 1 and the crucible 6 and eliminates the need for luting materials. For example, to avoid waste 5 leaking from the interface between the filter 1 and the crucible 6, a robust and fume-proof seal between the filter 1 and crucible 6, in turn leading to improving filtering efficiency. The filter 1 includes a large thermally-resistant seal felt 12 disposed around the inlet 103 of the body 10 that ultimately sits between the underside of the body 10 and the top 63 of the crucible 6 for sealing the filter 1 with the crucible 6. The material of the seal felt 12 is made of refractory ceramic fibers with high-temperature stability and low thermal conductivity. For example, the seal felt 12 is made from refractory ceramic fibers, examples of which include silica, alumina and/or zirconia. The seal felt 12 also improves the stability of the filter 1 when the filter 1 is placed on the crucible 6. The seal felt 12 and the weight of the filter 1 provides a fume-proof seal with the crucible 6 without the need for luting paste. The need for luting paste between the filter 1 and the crucible 6 when using the conventional filter makes the process cumbersome, with repeated manual removal of the paste serving to increase the time required and increasing the risk of an inadequate seal between the filter 1 and the crucible 6. Moreover, the seal felt 12 can be used for multiple welds. Also, the large surface area of the seal felt 12 allows for easy alignment between the filter 1 and the top 63 of the crucible 6. The robust nature of the seal also encourages gas and particulate flow toward the filter material 104s.

The body 10, the first protruding portion 101, and the second protruding portion 102 define a crucible receiving area 16 for securing the filter 1 on the crucible 6. The inlet 103 of the body 10 is designed to cover the outlet 60 of the crucible 6 during the aluminothermic welding reaction and guide the waste 5 into the passage. The size of the inlet 103 of the body 10 is between 5 cm and 15 cm (preferably 9 cm) in diameter. The inlet 103 of the body 10 can also be other shapes, such as a square. The filter 1 includes a felt restraint 13 for keeping the seal felt 12 on the bottom 107 of the body 10 when placing the filter 1 on the top 63 of the crucible 6 and/or for guiding the outlet 60 of the crucible 6 with the inlet 103 of the filter 1. In a preferred embodiment, the filter 1 has four felt restraints 13 forming a diamond shape around the outlet of the body 10 and between the first protruding portion 101 and the second protruding portion 102 in the crucible receiving area 16. The felt restraints 13 improve the stability of the filter 1 on the crucible 6 and effectively eliminate the risk of incorrect placement of the filter 1 onto the crucible 6.

In a preferred embodiment, the filter 1 can be symmetrically or asymmetrically formed. If the filter 1 or the body 10 is formed as a circular box, the first protruding portion 101 and the second protruding portion 102 can be integrally formed. In another embodiment, the body 10 includes an additional door (not shown in the drawings) outside of the first outlet 1010 and an additional door (not shown in the drawings) outside of the second outlet 1020.

The present invention also provides a method for filtering waste 5 produced from a crucible 6 during aluminothermic welding reaction, comprising: (S1) igniting aluminothermic welding chemicals in the crucible 6, (S2) placing the filter 1 onto the top 63 of the crucible 6, (S3) waiting for a predetermined duration (for example, 10 seconds to 5 minutes, preferably around 1-3 minutes) for the filter 1 to capture waste 5 produced by the aluminothermic welding reaction, and (S4) removing the filter 1 from the crucible 6.

### List of Elements

- 2: welder
- 3: rail
- 4: mould
- 5: waste
- 6: crucible
- 60: outlet
- 61: axis
- 62: side
- 63: top
- 1: filter
- 10: body
- 100: waste passage
- 103: inlet
- 104: filter material
- 101: first protruding portion
- 1010: first outlet
- 1011: lower part
- 102: second protruding portion
- 1020: second outlet
- 1021: lower part
- 105: mounting plate
- 106: baffle plate
- 107: bottom
- 11: handle
- 12: seal felt
- 13: felt restraint
- 14: latch
- 15: hinge
- 16: crucible receiving area
- 17: slag precipitation area

## Claims

1. A filter for filtering waste produced from a crucible during the aluminothermic welding reaction, the filter (1) being used for placing on an outlet (60) of the crucible (6), the filter (1) comprising:
a body (10) including:
a waste passage (100),
an inlet (103) for directing the waste (5) from the outlet (60) of the crucible (6) into the waste passage (100),
a filter material (104) for filtering the waste (5),
**characterized in that** the body (10) includes: a first protruding portion (101) extending adj acent to the side of the crucible (6) and including a first outlet (1010), and a second protruding portion (102) extending adjacent to the side of the crucible (6) and including a second outlet (1020).

2. The filter of Claim 1, wherein the filter material (104) is provided in the first protruding portion (101) and/or the second protruding portion (102).

3. The filter of one of the preceding claims, wherein the first outlet (1010) and the second outlet (1020) face downward when the filter (1) is placed on the crucible (6).

4. The filter of one of the preceding claims, the first protruding portion (101) and the second protruding portion (102) extend out from the cross-section of the crucible (6) when the filter (1) is placed on the crucible (6) and is viewed from above.

5. The filter of one of the preceding claims, wherein the body (10), the first protruding portion (101), and the second protruding portion (102) define a crucible receiving area (16) for securing the filter (1) on the crucible (6).

6. The filter of one of the preceding claims, wherein the inlet (103), the first outlet (1010), the second outlet (1020), and the waste passage (100) are communicated, the first outlet (1010) and the second outlet (1020) directing the waste (5) out of the filter (1).

7. The filter of one of the preceding claims, wherein the first outlet (1010) and the second outlet (1020) are respectively hinged with the first protruding portion (101) and the second protruding portion (102) so that the first outlet (1010) and the second outlet (1020) are openable.

8. The filter of one of the preceding claims, wherein the filter (1) includes a latch (14) for attaching the first outlet (1010) and the second outlet (1020) to the body (10).

9. The filter of one of the preceding claims, wherein the first outlet (1010) and the second outlet (1020) are configured to be meshes made of metal.

10. The filter of one of the preceding claims, wherein the body (10) includes a mounting plate (105) for contacting the top of the crucible (6), the inlet (103) provided on the mounting plate (105), the mounting plate (105) extending into the first protruding portion (101) and the second protruding portion (102).

11. The filter of Claim 10, wherein the filter (1) includes a baffle plate (106) in the body (10) for slowing down the waste (5) inside the body (10) to prevent slag surging out of the crucible (6) from contacting the filter material (104).

12. The filter of Claim 11, wherein the baffle plate (106) and the mounting plate (105) define a slag precipitation area (17), the baffle and slag precipitation area (17) are configured to inhibit the slag crossing over the baffle.

13. The filter of Claim 10 or 11, wherein the baffle plate (106) extends perpendicularly from the mounting plate (105).

14. The filter of one of the preceding claims, wherein the filter (1) includes a thermally-resistant seal felt (12) disposed around the inlet (103) of the body (10) for sealing the filter (1) with the outlet (60) of the crucible (6).

15. The filter of Claim 13, wherein the filter (1) includes a felt (12) restraint (13) for keeping the seal felt (12) on the bottom (107) of the body (10) when placing the filter (1) on the top (63) of the crucible (6).

16. The filter of one of the preceding claims, wherein the material of the seal felt (12) is made from refractory ceramic fibers, silica, alumina and/or zirconia.

17. The filter of one of the preceding claims, wherein the inlet (103) of the body (10) is designed to cover the outlet (60) of the crucible (6) during the aluminothermic welding reaction and guide the waste (5) into the waste passage (100).

18. The filter of one of the preceding claims, wherein the inlet (103) of the body (10) is circle shaped.

19. The filter of one of the preceding claims, wherein the filter (1) is symmetrically formed.

20. The filter of one of the preceding claims, wherein the body (10) is shaped to be a rectangular box, a circular box, a square box, or a triangular box when the filter (1) is placed on the top (63) of the crucible (6) and is viewed from above.

21. The filter of one of the preceding claims, wherein the first protruding portion (101) and the second protruding portion (102) are communicably and integrally formed.

22. The filter of one of the preceding claims, further comprising one handle (11) disposed on the top of the body (10).

23. The filter of one of the preceding claims, wherein the filter material (104) is made from a combination of fire retardant and noncombustible materials including polymer, nylon, glass, mineral stone wool, calcium magnesium silicate, alumina-silica, alumina-zirconia silica, and/or magnesia.

24. A method for filtering waste produced from a crucible (6) during the aluminothermic welding reaction, comprising:
igniting aluminothermic welding chemicals in the crucible (6),
placing the filter (1) of any one of Claims 1-23 onto the top (63) of the crucible (6),
waiting for a predetermined duration for the filter (1) to capture waste (5) produced by the aluminothermic welding reaction, and
removing the filter (1) from the crucible (6).

## Patentansprüche

1. Filter zum Filtern von Abfällen, die während der aluminothermischen Schweißreaktion in einem Tiegel entstehen, wobei der Filter (1) dazu dient, auf einem Auslass (60) des Tiegels (6) angeordnet zu werden, wobei der Filter (1) Folgendes umfasst:
einen Körper (10), der Folgendes umfasst:
einen Abfallkanal (100),
einen Einlass (103), um den Abfall (5) vom Auslass (60) des Tiegels (6) in den Abfallkanal (100) zu leiten,
ein Filtermaterial (104) zum Filtern des Abfalls (5),
**dadurch gekennzeichnet, dass** der Körper (10) umfasst: einen ersten vorstehenden Abschnitt (101), der sich angrenzend an die Seite des Tiegels (6) erstreckt und einen ersten Auslass (1010) umfasst, und einen zweiten vorstehenden Abschnitt (102), der sich angrenzend an die Seite des Tiegels (6) erstreckt und einen zweiten Auslass (1020) umfasst.

2. Filter nach Anspruch 1, wobei das Filtermaterial (104) in dem ersten vorspringenden Abschnitt (101) und/oder dem zweiten vorspringenden Abschnitt (102) vorgesehen ist.

3. Filter nach einem der vorhergehenden Ansprüche, wobei der erste Auslass (1010) und der zweite Auslass (1020) nach unten gerichtet sind, wenn der Filter (1) auf den Tiegel (6) aufgesetzt ist.

4. Filter nach einem der vorhergehenden Ansprüche, wobei der erste vorstehende Abschnitt (101) und der zweite vorstehende Abschnitt (102) aus dem Querschnitt des Tiegels (6) herausragen, wenn der Filter (1) auf den Tiegel (6) aufgesetzt ist und von oben betrachtet wird.

5. Filter nach einem der vorhergehenden Ansprüche, wobei der Körper (10), der erste vorstehende Abschnitt (101) und der zweite vorstehende Abschnitt (102) einen Tiegelaufnahmebereich (16) zur Befestigung des Filters (1) auf dem Tiegel (6) definieren.

6. Filter nach einem der vorhergehenden Ansprüche, bei dem der Einlass (103), der erste Auslass (1010), der zweite Auslass (1020) und der Abfallkanal (100) miteinander verbunden sind, wobei der erste Auslass (1010) und der zweite Auslass (1020) den Abfall (5) aus dem Filter (1) leiten.

7. Filter nach einem der vorhergehenden Ansprüche, wobei der erste Auslass (1010) und der zweite Auslass (1020) jeweils mit dem ersten vorstehenden Abschnitt (101) und dem zweiten vorstehenden Abschnitt (102) gelenkig verbunden sind, so dass der erste Auslass (1010) und der zweite Auslass (1020) geöffnet werden können.

8. Filter nach einem der vorhergehenden Ansprüche, wobei der Filter (1) einen Riegel (14) zum Befestigen des ersten Auslasses (1010) und des zweiten Auslasses (1020) am Körper (10) aufweist.

9. Filter nach einem der vorhergehenden Ansprüche, wobei der erste Auslass (1010) und der zweite Auslass (1020) als Maschen aus Metall ausgebildet sind.

10. Filter nach einem der vorhergehenden Ansprüche, wobei der Körper (10) eine Montageplatte (105) zum Berühren der Oberseite des Tiegels (6) aufweist, wobei der Einlass (103) an der Montageplatte (105) vorgesehen ist, wobei sich die Montageplatte (105) in den ersten vorstehenden Abschnitt (101) und den zweiten vorstehenden Abschnitt (102) erstreckt.

11. Filter nach Anspruch 10, wobei der Filter (1) eine Ablenkplatte (106) im Körper (10) zur Verlangsamung des Abfalls (5) innerhalb des Körpers (10) aufweist, um zu verhindern, dass aus dem Tiegel (6) herausschwappende Schlacke mit dem Filtermaterial (104) in Kontakt kommt.

12. Filter nach Anspruch 11, bei dem die Ablenkplatte (106) und die Montageplatte (105) einen Schlackenabscheidebereich (17) definieren, wobei die Ablenkplatte und der Schlackenabscheidebereich (17) so konfiguriert sind, dass sie verhindern, dass die Schlacke über die Ablenkplatte läuft.

13. Filter nach Anspruch 10 oder 11, wobei sich die Ablenkplatte (106) senkrecht von der Montageplatte (105) erstreckt.

14. Filter nach einem der vorhergehenden Ansprüche, wobei der Filter (1) einen wärmebeständigen Dichtungsfilz (12) aufweist, der um den Einlass (103) des Körpers (10) angeordnet ist, um den Filter (1) mit dem Auslass (60) des Tiegels (6) abzudichten.

15. Filter nach Anspruch 13, wobei der Filter (1) eine Filz (12)-Halterung (13) aufweist, um den Dichtungsfilz (12) auf dem Boden (107) des Körpers (10) zu halten, wenn der Filter (1) auf die Oberseite (63) des Tiegels (6) aufgesetzt wird.

16. Filter nach einem der vorhergehenden Ansprüche, wobei das Material des Dichtungsfilzes (12) aus feuerfesten Keramikfasern, Siliziumdioxid, Aluminiumoxid und/oder Zirkoniumdioxid besteht.

17. Filter nach einem der vorhergehenden Ansprüche, wobei der Einlass (103) des Körpers (10) so gestaltet ist, dass er den Auslass (60) des Tiegels (6) während der aluminothermischen Schweißreaktion abdeckt und den Abfall (5) in den Abfallkanal (100) leitet.

18. Der Filter nach einem der vorhergehenden Ansprüche, wobei der Einlass (103) des Körpers (10) kreisförmig ist.

19. Filter nach einem der vorhergehenden Ansprüche, wobei der Filter (1) symmetrisch ausgebildet ist.

20. Filter nach einem der vorhergehenden Ansprüche, wobei der Körper (10) so geformt ist, dass er ein rechteckiger Kasten, ein kreisförmiger Kasten, ein quadratischer Kasten oder ein dreieckiger Kasten ist, wenn der Filter (1) auf die Oberseite (63) des Tiegels (6) gelegt und von oben betrachtet wird.

21. Filter nach einem der vorhergehenden Ansprüche, bei dem der erste vorstehende Abschnitt (101) und der zweite vorstehende Abschnitt (102) kommunizierend und einstückig ausgebildet sind.

22. Der Filter nach einem der vorhergehenden Ansprüche umfasst außerdem einen Griff (11), der an der Oberseite des Körpers (10) angeordnet ist.

23. Der Filter nach einem der vorhergehenden Ansprüche, wobei das Filtermaterial (104) aus einer Kombination von feuerhemmenden und nicht brennbaren Materialien einschließlich Polymer, Nylon, Glas, Mineralsteinwolle, Kalziummagnesiumsilikat, Aluminiumoxid-Siliziumdioxid, Aluminiumoxid-Zirkoniumdioxid-Siliziumdioxid und/oder Magnesiumoxid hergestellt ist.

24. Verfahren zum Filtern von Abfällen, die während der aluminothermischen Schweißreaktion aus einem Schmelztiegel (6) entstehen, umfassend:
Entzündung aluminothermischer Schweißchemikalien im Tiegel (6),
Aufsetzen des Filters (1) nach einem der Ansprüche 1-23 auf die Oberseite (63) des Tiegels (6),
Abwarten einer vorbestimmten Dauer, bis der Filter (1) die durch die aluminothermische Schweißreaktion erzeugten Abfälle (5) aufgenommen hat, und
Entnahme des Filters (1) aus dem Tiegel (6)

## Revendications

1. Filtre destiné à filtrer des déchets produits à partir d'un creuset pendant la réaction de soudage aluminothermique, le filtre (1) étant utilisé pour être placé sur une sortie (60) du creuset (6), le filtre (1) comprenant:
un corps (10) comprenant:
une passage de déchets (100),
une entrée (103) pour diriger les déchets (5) depuis la sortie (60) du creuset (6) dans le passage de déchets (100),
un matériau filtrant (104) pour filtrer les déchets (5),
**caractérisé en ce que** le corps (10) comprend: une première partie saillante (101) s'étendant adjacente au côté du creuset (6) et comprenant une première sortie (1010), et une deuxième partie saillante (102) s'étendant adjacente au côté du creuset (6) et comprenant une deuxième sortie (1020).

2. Filtre selon la revendication 1, dans lequel le matériau filtrant (104) est prévu dans la première partie saillante (101) et/ou la deuxième partie saillante (102).

3. Filtre selon l'une des revendications précédentes, dans lequel la première sortie (1010) et la deuxième sortie (1020) sont orientées vers le bas lorsque le filtre (1) est placé sur le creuset (6).

4. Filtre selon l'une des revendications précédentes, la première partie saillante (101) et la deuxième partie saillante (102) s'étendent hors de la section transversale du creuset (6) lorsque le filtre (1) est placé sur le creuset (6) et est vu de dessus.

5. Filtre selon l'une des revendications précédentes, dans lequel le corps (10), la première partie saillante (101), et la deuxième partie saillante (102) définissent une zone de réception du creuset (16) pour fixer le filtre (1) sur le creuset (6).

6. Filtre selon l'une des revendications précédentes, dans lequel l'entrée (103), la première sortie (1010), la deuxième sortie (1020) et le passage de déchets (100) communiquent, la première sortie (1010) et la deuxième sortie (1020) dirigeant les déchets (5) hors du filtre (1).

7. Filtre selon l'une des revendications précédentes, dans lequel la première sortie (1010) et la deuxième sortie (1020) sont respectivement articulées avec la première partie saillante (101) et la deuxième partie saillante (102) de sorte que la première sortie (1010) et la deuxième sortie (1020) peuvent être ouvertes.

8. Filtre selon l'une des revendications précédentes, dans lequel le filtre (1) comprend un loquet (14) pour fixer la première sortie (1010) et la deuxième sortie (1020) au corps (10).

9. Filtre selon l'une des revendications précédentes, dans lequel la première sortie (1010) et la deuxième sortie (1020) sont configurées pour être des mailles en métal.

10. Filtre selon l'une des revendications précédentes, dans lequel le corps (10) comprend une plaque de montage (105) pour entrer en contact avec le sommet du creuset (6), l'entrée (103) prévue sur la plaque de montage (105), la plaque de montage (105) s'étendant dans la première partie saillante (101) et la deuxième partie saillante (102).

11. Filtre selon la revendication 10, dans lequel le filtre (1) comprend une plaque déflectrice (106) dans le corps (10) pour ralentir les déchets (5) à l'intérieur du corps (10) afin d'empêcher les scories sortant du creuset (6) d'entrer en contact avec le matériau filtrant (104).

12. Filtre selon la revendication 11, dans lequel la plaque déflectrice (106) et la plaque de montage (105) définissent une zone de précipitation des scories (17), la plaque déflectrice et la zone de précipitation de scories (17) sont configurées pour empêcher les scories de traverser la plaque déflectrice.

13. Filtre selon la revendication 10 ou 11, dans lequel la plaque déflectrice (106) s'étend perpendiculairement à la plaque de montage (105).

14. Filtre selon l'une des revendications précédentes, dans lequel le filtre (1) comprend un feutre d'étanchéité thermiquement résistant (12) disposé autour de l'entrée (103) du corps (10) pour sceller le filtre (1) avec la sortie (60) du creuset (6).

15. Filtre selon la revendication 13, dans lequel le filtre (1) comprend une retenue (13) de feutre (12) pour maintenir le feutre d'étanchéité (12) sur le fond (107) du corps (10) lorsque le filtre (1) est placé sur le sommet (63) du creuset (6).

16. Filtre selon l'une des revendications précédentes, dans lequel le matériau du feutre d'étanchéité (12) est constitué de fibres céramiques réfractaires, de silice, d'alumine et/ou de zircone.

17. Filtre selon l'une des revendications précédentes, dans lequel l'entrée (103) du corps (10) est conçue pour couvrir la sortie (60) du creuset (6) pendant la réaction de soudage aluminothermique et guider les déchets (5) dans le passage de déchets (100).

18. Filtre selon l'une des revendications précédentes, dans lequel l'entrée (103) du corps (10) est en forme de cercle.

19. Filtre selon l'une des revendications précédentes, dans lequel le filtre (1) est formé symétriquement.

20. Filtre selon l'une des revendications précédentes, dans lequel le corps (10) est formé pour être une boîte rectangulaire, une boîte circulaire, une boîte carrée ou une boîte triangulaire lorsque le filtre (1) est placé sur le sommet (63) du creuset (6) et est vu de dessus.

21. Filtre selon l'une des revendications précédentes, dans lequel la première partie saillante (101) et la deuxième partie saillante (102) sont formées de manière à communiquer et d'un seul tenant.

22. Filtre selon l'une des revendications précédentes, comprenant en outre une poignée (11) disposée sur le sommet du corps (10).

23. Filtre selon l'une des revendications précédentes, dans lequel le matériau filtrant (104) est fabriqué à partir d'une combinaison de matériaux ignifuges et non combustibles comprenant un polymère, du nylon, du verre, de la laine de roche minérale, du silicate de calcium et de magnésium, de l'alumine-silice, de l'alumine-zircone-silice et/ou de la magnésie.

24. Procédé de filtrage des déchets produits à partir d'un creuset (6) pendant la réaction de soudage aluminothermique, comprenant:
l'allumage de produits chimiques de soudage aluminothermique dans le creuset (6),
le placement du filtre (1) selon l'une quelconque des revendications 1 à 23 sur le sommet (63) du creuset (6),
l'attente d'une durée prédéterminée pour que le filtre (1) capture les déchets (5) produits par la réaction de soudage aluminothermique, et
le retrait du filtre (1) du creuset (6).
